# EUROPEAN PATENT SPECIFICATION

(11) **EP 0 863 078 B1**
(45) Date of publication and mention of the grant of the patent: **10.12.2003**
(21) Application number: 98103832.6
(22) Date of filing: 04.03.1998
(51) Int. Cl.: B65B 11/30, B65B 57/10

(54) **Machine for cellophaning packets of cigarettes**
Maschine zum Verpacken von Zigarettenpackungen in Zellglas
Machine pour la mise sous cellophane de paquets de cigarettes

(30) Priority: 06.03.1997 IT BO970125
(43) Date of publication of application: 09.09.1998
(73) Proprietor: G.D SOCIETA' PER AZIONI, 40133 Bologna (BO) (IT)
(72) Inventor: Draghetti, Fiorenzo, 40059 Medicina (IT); Osti, Roberto, 40069 Zola Predosa (IT)
(74) Representative: Jorio, Paolo

(56) References cited:
- EP-A- 0 374 712
- GB-A- 2 272 678

## Description

The present invention relates to a machine for cellophaning packets of cigarettes.

In particular, the present invention relates to a machine for cellophaning packets of cigarettes, comprising a wrapping conveyor with a number of pockets, each for housing a respective packet, the wrapping conveyor being movable in a given traveling direction to feed the pockets along a given path between a loading station and an unloading station; at least a first folding element located along the path, immediately downstream from the loading station in the traveling direction; at least one heat-seal element located along the path; and supporting elements for supporting the first folding element and the heat-seal element.

The wrapping conveyor of known cellophaning machines (see EP-A-374 712 or GB-A-2 272 678) of the above type is normally operated in steps, at each of which a pocket is positioned facing a pusher located at the loading station and movable to and from the pocket to feed a packet into the pocket together with a respective sheet of wrapping material; and the first folding element of known cellophaning machines is defined by a fixed plate through which move a number of heat-seal elements, each of which is powered to move to and from a heat-seal position contacting a packet.

On known machines of the above type, failure of the packet to be inserted fully inside the respective pocket at the loading station may result in stoppage of the wrapping conveyor by the partly inserted packet colliding with the fixed plate. Worse still, even in the event the wrapping conveyor, and hence the machine as a whole, is not arrested, passage of the partly inserted packet beneath the fixed plate may result in breakage of the heat-seal elements.

It is an object of the present invention to provide a cellophaning machine designed to eliminate the aforementioned drawbacks.

According to the present invention, there is provided a machine for cellophaning packets of cigarettes, comprising a wrapping conveyor with a number of pockets, each for housing a respective said packet, the wrapping conveyor being movable in a given direction to feed said pockets along a path between a loading station and an unloading station; at least a first folding element located along said path, immediately downstream from the loading station in said direction; at least one heat-seal element located along said path; and supporting means for supporting the first folding element and the heat-seal element; characterized by comprising control means for controlling correct insertion of the packets inside the respective pockets at the loading station; said supporting means being movable supporting means; and actuating means being provided to impart to said supporting means a movement to and from said wrapping conveyor in response to signals emitted by said control means.

A non-limiting embodiment of the present invention will be described by way of example with reference to the accompanying drawings, in which:
Figure 1 shows a schematic, partially sectioned view, with parts removed for clarity, of a preferred embodiment of the cellophaning machine according to the present invention;
Figure 2 shows the Figure 1 machine in a different operating position.

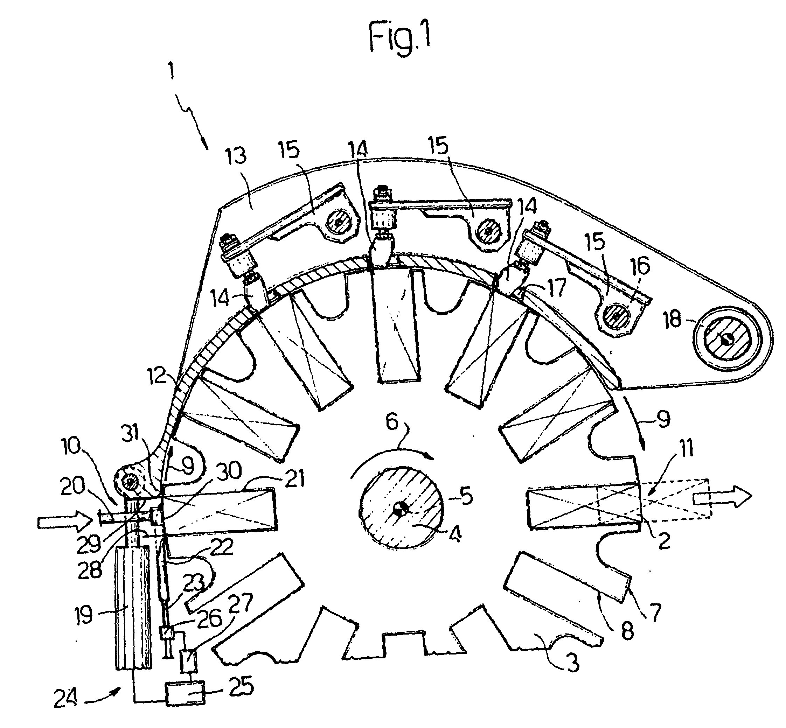

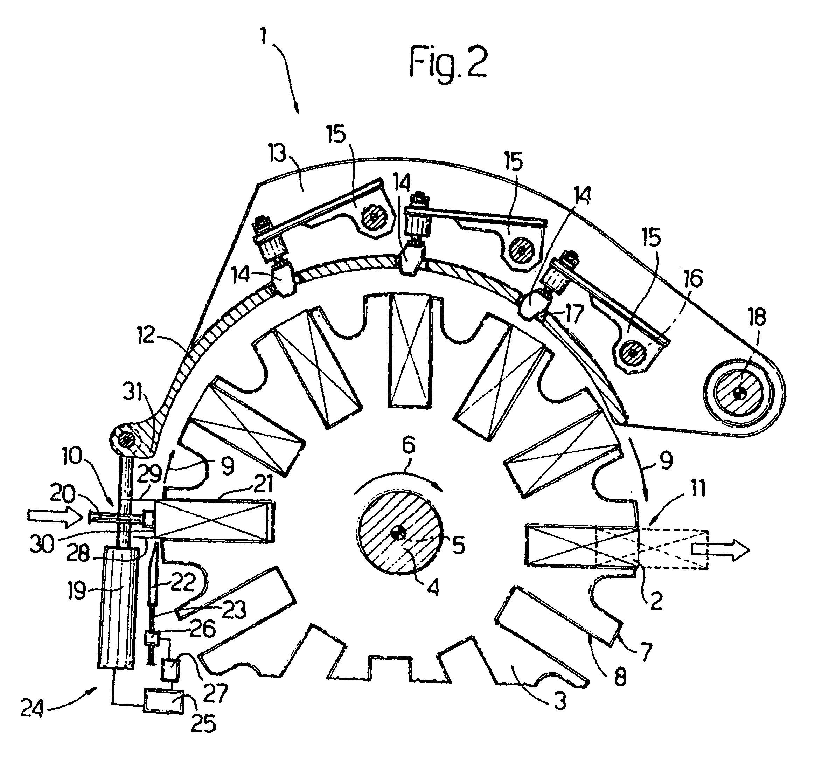

Number 1 in Figures 1 and 2 indicates as a whole a machine for cellophaning packets 2 of cigarettes.

Machine 1 comprises a wrapping wheel 3, which is supported centrally on a shaft 4 coaxial with a horizontal axis 5, and is driven in steps (by drive devices not shown) to rotate in a clockwise direction 6 in the accompanying drawings. Wheel 3 is defined externally by a substantially cylindrical lateral surface 7 having a number of pockets 8 equally spaced about axis 5, and each for housing and feeding a respective packet 2 along a path 9 from a loading station 10 to an unloading station 11.

Machine 1 also comprises a first folding element defined by a curved plate 12 extending alongside surface 7 and along path 9 from a point immediately downstream from loading station 10, and substantially closing the inlets of pockets 8 along path 9; and a rib 13 extending along plate 12 in a plane perpendicular to axis 5, and rigidly supporting plate 12.

Machine 1 also comprises a number of powered heat-seal elements 14 facing path 9, and each fitted to a respective arm 15 connected in rotary manner to rib 13 to rotate, with respect to rib 13 and about an axis 16 parallel to axis 5, to and from a forward heat-seal position wherein heat-seal element 14 extends through a respective hole 17 formed in plate 12 to contact a packet 2 inside a pocket 8 arrested facing hole 17 (Figure 1).

Rib 13 is connected to a fixed frame (not shown) of machine 1 to rotate, with respect to the frame, about an axis 18 parallel to axis 5 and substantially on the opposite side of axis 5 to station 10.

Machine 1 also comprises an actuator 19 for controlling the angular position of rib 13 about axis 18, and which is connected to plate 12, close to station 10, to rotate rib 13 and plate 12 between a normal operating position (Figure 1) in which plate 12 is substantially tangent to surface 7, and a withdrawn safety position (Figure 2) in which plate 12 is a given distance from surface 7.

Machine 1 also comprises a pusher 20 facing surface 7 at station 10, and movable radially to and from wheel 3 to insert each packet 2 inside respective pocket 8, together with a respective sheet 21 of wrapping material, as pocket 8 is arrested at station 10.

Machine 1 also comprises a second folding element 22 facing surface 7 at station 10, and which is moved, by a powered control rod 23, to and from plate 12 and through station 10 in direction 6.

Finally, machine 1 also comprises an automatic control unit 24 in turn comprising, in addition to folding element 22 and rod 23, a central control unit 25 for controlling actuator 19, and a pressure sensing device 26 located along rod 23 and connected to an input of central unit 25 via a threshold device 27.

In actual use, wheel 3 is rotated in steps about axis 5 in direction 6; at each step, a pocket 8 is arrested at loading station 10 and engaged by a respective packet 2 pushed towards axis 5 by pusher 20 together with a respective sheet 21 of wrapping material; and, as packet 2 is inserted inside pocket 8, sheet 21 is folded into a U about packet 2 so that two end portions 28 and 29 of the sheet project outwards of pocket 8.

If packet 2 is inserted correctly inside respective pocket 8, folding element 22, when operated, folds a first of said two portions 28 and 29 smoothly and effortlessly onto an end 30 of respective packet 2, so that sensing device 26 emits a signal of a value below a predetermined threshold value set by threshold device 27. Central unit 25 is therefore unaffected, and permits normal performance of the folding cycle, in which an input edge 31 of plate 12 folds the second of said portions 28 and 29 onto the first portion, and portions 28 and 29 are gradually heat-sealed to each other as packet 2 is arrested facing heat-seal elements 14.

Conversely, in the event packet 2 is not inserted correctly inside respective pocket 8 and projects partially outwards of surface 7, folding element 22, when operated, engages packet 2, so that considerable compressive stress is applied to rod 23, and sensing device 26 emits a signal which is supplied to central unit 25 via threshold device 27 to operate actuator 19 and so move rib 13 into the withdrawn safety position (Figure 2) in which plate 12 and heat-seal elements 14 are withdrawn a sufficient distance from surface 7 to permit safe passage of packet 2, which is later rejected.

## Claims

1. A machine for cellophaning packets of cigarettes, comprising a wrapping conveyor (3) with a number of pockets (8), each for housing a respective said packet (2), the wrapping conveyor (3) being movable in a given direction (6) to feed said pockets (8) along a path (9) between a loading station (10) and an unloading station (11); at least a first folding element (12) located along said path (9), immediately downstream from the loading station (10) in said direction ( 6) ; at least one heat-seal element (14) located along said path (9); and supporting means (13) for supporting the first folding element (12) and the heat-seal element (14); **characterized by** comprising control means (24) for controlling correct insertion of the packets (2) inside the respective pockets (8) at the loading station (10); said supporting means (13) being movable supporting means; and actuating means (19) being provided to impart to said supporting means (13) a movement to and from said wrapping conveyor (3) in response to signals emitted by said control means (24).

2. A machine as claimed in Claim 1, **characterized in that** said wrapping conveyor (3) is a wrapping wheel mounted for rotation about a first axis (5), and having a substantially cylindrical outer surface (7) along which said pockets (8) are arranged; said supporting means (13) extending along said path (9), and performing said movement to and from a position in which said first folding element (12) and said outer surface (7) are substantially tangent.

3. A machine as claimed in Claim 2, **characterized in that** said movement is a rotation about a second axis (18) parallel to the first axis (5).

4. A machine as claimed in Claim 3, **characterized in that** said second axis (18) is located substantially on the opposite side of the first axis (5) to said loading station (10).

5. A machine as claimed in any one of the foregoing Claims, **characterized by** also comprising at least a second folding element (22) located at said loading station (10); said second folding element (22) being movable to and from the first folding element (12) and through the loading station (10).

6. A machine as claimed in Claim 5, **characterized in that** said second folding element (22) forms part of said control means (24).

7. A machine as claimed in any one of the foregoing Claims, **characterized in that** said first folding element (12) is fixed rigidly to said supporting means (13).

8. A machine as claimed in any one of the foregoing Claims from 2 to 7, **characterized in that** said heat-seal element (14) is fitted to said supporting means (13) to rotate, with respect to the supporting means (13), about a third axis (16) parallel to said first axis (5).

## Patentansprüche

1. Maschine zum Verpacken von Zigarettenpackungen in Zellglas, mit einem Wickelförderer (3) mit einer Anzahl Ablagefächer (8), von welchen jedes zum Unterbringen einer entsprechenden Packung (2) vorgesehen ist, wobei der Wickelförderer (3) in einer gegebenen Richtung (6) bewegbar ist, um die Ablagefächer (8) entlang eines Pfades (9) zwischen einer Beladestation (10) und einer Entladestation (11) zu bewegen, mit mindestens einem ersten Faltelement (12), das entlang des Pfades (9) in Richtung (6) unmittelbar stromabwärts von der Beladestation (10) angeordnet ist, mit mindestens einem Heißkleberelement (14), das entlang des Pfades (9) angeordnet ist, und mit Halteinrichtungen (13) zum Halten des ersten Faltelementes (12) und des mindestens einen Heißkleberelementes (14),
**gekennzeichnet durch**
eine Steuereinrichtung (24) zum Steuern des korrekten Einsetzens der Packungen (2) in die entsprechenden Ablagefächer (8) an der Beladestation (10), wobei die Halteeinrichtungen (13) bewegliche Halteeinrichtungen sind, und Betätigungseinrichtungen (19) vorgesehen sind, um die Halteeinrichtungen (13) hin zum und weg vom Wickelförderer (3) entsprechend Signalen zu bewegen, die von der Steuereinrichtung (24) ausgegeben werden.

2. Maschine nach Anspruch 1,
**dadurch gekennzeichnet,**
**dass** der Wickelförderer (3) ein Wickelrad ist, das um eine erste Achse (5) drehbar ist und das eine im wesentlichen zylindrische Außenfläche (7) besitzt, entlang der die Ablagefächer (8) angeordnet sind, wobei die Halteeinrichtungen (13) sich entlang des Pfades (9) erstrecken und die Bewegung hin zu und weg von einer Position durchführen, in der das erste Faltelement (12) und die Außenfläche (7) zueinander im wesentlichen tangential sind.

3. Maschine nach Anspruch 2,
**dadurch gekennzeichnet,**
**dass** die Bewegung eine Drehung um eine zur ersten Achse parallele zweite Achse (18) ist.

4. Maschine nach Anspruch 3,
**dadurch gekennzeichnet,**
**dass** die zweite Achse (18) an der von der Beladestation (10) in Bezug auf die erste Achse (5) im wesentlichen gegenüberliegenden Seite vorgesehen ist.

5. Maschine nach einem der vorhergehenden Ansprüche,
**gekennzeichnet durch**
mindestens ein zweites Faltelement (22), das an der Beladestation (10) vorgesehen ist, wobei das zweite Faltelement (22) hin zum und weg vom ersten Faltelement (12) und **durch** die Beladestation (10) bewegbar ist.

6. Maschine nach Anspruch 5,
**dadurch gekennzeichnet,**
**dass** das zweite Faltelement (22) ein Teil der Steuereinrichtung (24) bildet.

7. Maschine nach einem der vorhergehende Ansprüche,
**dadurch gekennzeichnet,**
**dass** das erste Faltelement (12) starr an der Halteeinrichtung (13) befestigt ist.

8. Maschine nach einem der Ansprüche 2 bis 7,
**dadurch gekennzeichnet,**
**dass** das mindestens eine Heißkleberelement (14) an den Halteeinrichtungen (13) um eine dritte Achse (16) drehbar angebracht ist, die zur ersten Achse (5) parallel ist.

## Revendications

1. Machine pour mettre sous Cellophane des paquets de cigarettes, comprenant un convoyeur (3) d'emballage pourvu d'un nombre de poches (8), chacune étant destinée à loger un paquet respectif (2), le convoyeur (3) d'emballage étant mobile dans un sens donné (6) pour faire avancer lesdites poches (8) le long d'un trajet (9) entre un poste (10) de chargement et un poste (11) de déchargement ; au moins un premier élément (12) de pliage situé le long dudit trajet (9), juste en aval du poste (10) de chargement dans ledit sens (6) ; au moins un élément (14) de thermosoudage situé le long dudit trajet (9) ; et un moyen (13) de support destiné à supporter le premier élément (12) de pliage et l'élément (14) de thermosoudage ; **caractérisée en ce qu'**elle comprend un moyen (24) de commande destiné à commander l'introduction correcte des paquets (2) à l'intérieur des poches respectives (8) au niveau du poste (10) de chargement ; ledit moyen (13) de support étant un moyen de support mobile ; et un moyen (19) d'actionnement étant prévu pour communiquer, audit moyen (13) de support, un mouvement en direction et à l'écart dudit convoyeur (3) d' emballage en réponse à des signaux émis par ledit moyen (24) de commande.

2. Machine selon la revendication 1, **caractérisée en ce que** ledit convoyeur (3) d'emballage est une roue d'emballage montée pour rotation autour d'un premier axe (5), et comportant une surface extérieure sensiblement cylindrique (7) le long de laquelle sont agencées lesdites poches (8) ; ledit moyen (13) de support s'étendant le long dudit trajet (9), et exécutant ledit mouvement en direction et à l'écart d'une position dans laquelle ledit premier élément (12) de pliage et ladite surface extérieure (7) sont sensiblement tangents.

3. Machine selon la revendication 2, **caractérisée en ce que** ledit mouvement est une rotation autour d'un deuxième axe (18) parallèle au premier axe (5).

4. Machine selon la revendication 3, **caractérisée en ce que** ledit deuxième axe (18) est situé sensiblement du côté opposé du premier axe (5) par rapport audit poste (10) de chargement.

5. Machine selon l'une quelconque des revendications précédentes, **caractérisée en ce qu'**elle comprend également au moins un second élément (22) de pliage situé au niveau dudit poste (10) de chargement ; ledit second élément (22) de pliage étant mobile en direction et à l'écart du premier élément (12) de pliage et à travers le poste (10) de chargement.

6. Machine selon la revendication 5, **caractérisée en ce que** ledit second élément (22) de pliage fait partie dudit moyen (24) de commande.

7. Machine selon l'une quelconque des revendications précédentes, **caractérisée en ce que** ledit premier élément (12) de pliage est fixé solidement audit moyen (13) de support.

8. Machine selon l'une quelconque des revendications précédentes de 2 à 7, **caractérisée en ce que** ledit élément (14) de thermosoudage est monté sur ledit moyen (13) de support, pour rotation, par rapport au moyen (13) de support, autour d'un troisième axe (16) parallèle audit premier axe (5).
